# FASCICULE DE BREVET EUROPEEN

(11) **EP 3 888 868 B1**
(45) Date de publication et mention de la délivrance du brevet: **03.06.2026**
(21) Numéro de dépôt: 21165957.8
(22) Date de dépôt: 30.03.2021
(51) Int. Cl.: B29C 44/14, B29C 37/00, B29C 44/06, B29C 44/08, B60N 2/70, B60N 2/66, B60N 2/72

(54) **PROCÉDÉ DE RÉALISATION D'UN ÉLÉMENT DE SUPPORT DE SIÈGE**
VERFAHREN ZUR HERSTELLUNG EINES SITZHALTERUNGSELEMENTS
METHOD FOR PRODUCING A COMPONENT OF A SEAT SUPPORT

(30) Priorité: 31.03.2020 FR 2003183
(43) Date de publication de la demande: 06.10.2021
(73) Titulaire: FAURECIA Sièges d'Automobile, 92000 Nanterre (FR)
(72) Inventeur: CABOUILLET, Anne-Sophie, 91870 BOISSY-LE-SEC (FR); ETIENNE, Fabrice, 90800 BAVILLIERS (FR); FICHET DELAVAULT, Pierre, 92120 MONTROUGE (FR); PHOMSAVANH, Davy, 92340 BOURG-LA-REINE (FR)
(74) Mandataire: Novagraaf Group

(56) Documents cités:
- EP-A1- 3 486 061
- WO-A1-02/102585
- FR-A1- 2 943 270
- US-A1- 2005 019 544

## Description

La présente invention concerne un procédé de réalisation d'un élément de support de siège.

L'invention concerne également un élément de support obtenu par un tel procédé.

Un tel élément de support forme par exemple l'assise ou le dossier d'un siège de véhicule. Un tel élément de support doit donc présenter un confort et un aspect satisfaisants pour l'accueil de passagers dans le véhicule.

Pour ce faire, l'élément de support est formé d'une matelassure sur laquelle une coque est fixée pour former une surface extérieure de l'élément de support. La coque confère donc son aspect à l'élément de support tandis que la matelassure est agencée pour recevoir l'occupant du siège de façon confortable. La coque et la matelassure sont réalisées séparément, par exemple par moulage, puis fixées l'une à l'autre pour former l'élément de support de siège. EP3486061 A1 concerne un procédé de réalisation d'un élément de support de siège.

Un tel procédé de réalisation est donc fastidieux et long à mettre en œuvre et nécessite un certain nombre de postes de travail pour réaliser les différentes étapes de fabrication de l'élément de support.

L'un des buts de l'invention est de pallier ces inconvénients en proposant un procédé de réalisation d'un élément de support simple et rapide à mettre en œuvre et pouvant être réalisé dans un nombre de postes de travail réduit.

A cet effet, l'invention concerne un procédé de réalisation d'un élément de support de siège selon la revendication 1.

Ainsi, le procédé de réalisation selon l'invention permet de réaliser dans un seul outil de réalisation un élément de support présentant un aspect et un confort satisfaisants en un nombre d'étapes réduit.

D'autres caractéristiques optionnelles de l'invention, prises isolément ou selon toute combinaison techniquement envisageable sont définies dans les revendications 2 à 14.

D'autres aspects et avantages de l'invention apparaîtront à la lecture de la description qui suit, donnée à titre d'exemple et faite en référence aux dessins annexés, dans lesquels :
[Fig 1] - la Fig. 1 est une représentation schématique en perspective d'un élément de support selon l'invention, vu du côté de la surface extérieure de l'élément de support,
[Fig 2] - la Fig. 2 est une représentation schématique de l'élément de support tranché au niveau de l'axe II-II de la Fig. 1,
[Fig 3] [Fig 4] [Fig 5] - les Figs. 3 à 5 sont des représentations schématiques en coupe de différentes étapes du procédé de réalisation d'un élément de support selon l'invention,
[Fig. 6] - la Fig. 6 est une représentation schématique en coupe d'une étape de réalisation d'un élément de support selon un mode de réalisation particulier de l'invention,
[Fig 7] [Fig 8] - les Figs. 7 et 8 sont des représentations schématiques en coupe d'étapes de réalisation d'un élément de support selon une variante du mode de réalisation de la Fig. 6,
[Fig 9] - la Fig. 9 est une représentation schématique en perspective d'un élément de support selon un autre mode de réalisation de l'invention,
[Fig. 10] - la Fig. 10 est une représentation schématique en perspective d'un élément de support selon un autre mode de réalisation de l'invention, et
[Fig 11] - la Fig. 11 est une représentation schématique en coupe d'une partie d'un outil de réalisation pour réaliser un élément de support selon la Fig. 10.

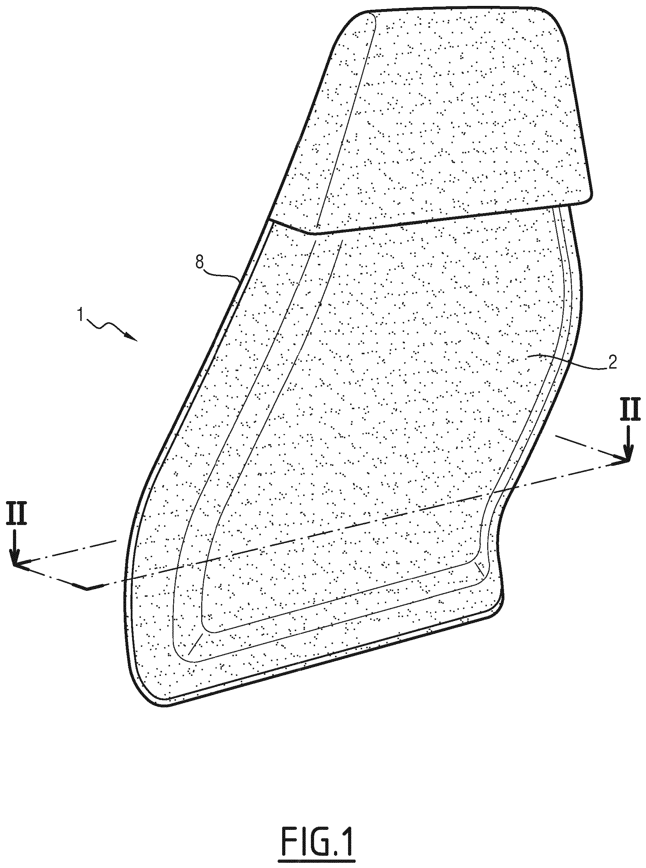

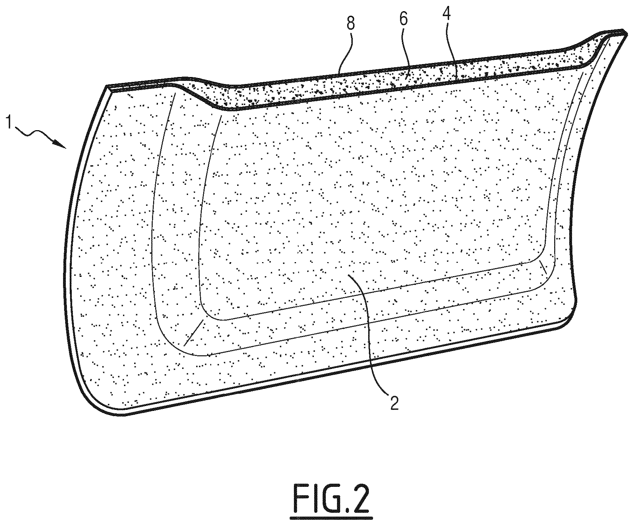

En référence aux Figs. 1 et 2, on décrit un élément de support 1 de siège de véhicule comprenant au moins une couche externe 2, une peau en matériau synthétique 4 et une première couche de mousse 6. Selon un mode de réalisation particulier qui sera décrit plus en détail ultérieurement, l'élément de support 1 comprend en outre un élément de couverture 8.

L'élément de support 1 est par exemple destiné à former un dossier de siège, comme représenté sur la Fig. 1. En variante, l'élément de support 1 pourrait être adapté pour former une assise de siège. Un tel élément de support 1 comprend une surface intérieure, destinée former une surface d'appui pour un occupant du siège, et une surface extérieure, opposée à la surface intérieure, et formant une surface qui n'est pas destinée à former une surface d'appui pour un occupant du siège. Selon le mode de réalisation représenté sur les figures, la surface extérieure est une surface au moins en partie visible depuis l'extérieur du siège. Dans la suite de la description, le terme « interne » désigne ce qui est tourné vers la surface intérieure de l'élément de support 1 et le terme « externe » désigne ce qui est tourné vers la surface extérieure de l'élément de support 1.

La couche externe 2 forme la surface extérieure de l'élément de support 1. Ainsi, dans le cas d'un dossier, la surface extérieure forme le dos du dossier, à l'opposé de la surface destinée à accueillir un passager. A l'opposé de la surface extérieure, la couche externe 2 définit une surface interne 10, non visible depuis l'extérieur de l'élément de support 1.

La couche externe 2 est formée par au moins une couche de peinture permettant de conférer un aspect particulier à la surface extérieure de l'élément de support 1, notamment en choisissant la couleur et la brillance de la couche de peinture. La couche de peinture est par exemple une peinture à l'eau ou une peinture à base de solvant. La couche externe 2 présente par exemple une épaisseur comprise entre 5 µm et 120 µm, de préférence entre 10 µm et 80 µm, par exemple environ 25 µm. Il est entendu que la couche externe 2 peut comprendre plusieurs couches de peinture et/ou de vernis, en fonction de l'aspect souhaité pour la couche externe 2 et de ses propriétés. Ainsi, la couche externe 2 peut présenter des propriétés anti-abrasives, de résistance à l'usure, à la lumière, aux produits chimiques, etc. La couche externe 2 peut également présenter un motif, tel qu'un grainage, un logo ou autre, ce motif pouvant être formé sur la couche externe 2 au cours de la réalisation de l'élément de support 1, comme cela sera décrit ultérieurement.

La peau en matériau synthétique 4 s'étend sur la surface interne 10 de la couche externe 2 et forme un support de la couche externe 2 en adhérant à celle-ci. La peau en matériau synthétique 4 présente une surface externe 12, s'étendant sur la surface interne 10 de la couche externe 2, et une surface interne 14, opposée à la surface externe 12. La peau en matériau synthétique 4 forme une coque sensiblement rigide ou semi-rigide de l'élément de support 1.

A cet effet, la peau en matériau synthétique 4 est formée en un matériau synthétique dépourvu d'eau. Plus particulièrement, la peau en matériau synthétique 4 s'apparente à une couche de mousse non cellulaire, c'est-à-dire dépourvue de cellules. En d'autres termes, la peau en matériau synthétique ne contient pas de bulles d'air, ce qui lui confère une certaine rigidité. Il convient de noter que la peau en matériau synthétique 4 peut contenir des bulles d'air résiduelles, dont la présence est due au procédé d'application de la peau en matériau synthétique 4 qui sera décrit ultérieurement.

La peau en matériau synthétique 4 est par exemple réalisée en un matériau élastomérique, par exemple un matériau résultant d'une réaction polyol-isocyanate. Selon un mode de réalisation, la peau en matériau synthétique 4 est réalisée en polyuréthane sensiblement non cellulaire et dépourvu d'eau. Ainsi, la peau en matériau synthétique 4 présente un comportement similaire à un textile enduit de plastique (TEP) ou à du similicuir.

La peau en matériau synthétique 4 présente par exemple une épaisseur comprise entre 0,1 mm et 3 mm, de préférence entre 0,5 mm et 2 mm. Il convient de noter que la peau en matériau synthétique 4 peut présenter une épaisseur variable selon les caractéristiques souhaitées, notamment en terme de rigidité, pour la coque de l'élément de support. La peau en matériau synthétique 4 présente par exemple une densité comprise entre 400 kg.m⁻³ et 1500 kg.m⁻³, de préférence entre 800 kg.m⁻³ et 1200 kg.m⁻³. La peau en matériau synthétique 4 présente par exemple une résistance à la traction comprise entre 1 Mpa et 50 Mpa, de préférence entre 3 Mpa et 15 Mpa, mesurée selon la méthode DIN EN ISO 527-3/2/100. La peau en matériau synthétique 4 présente par exemple une résistance au déchirement comprise entre 0,5 N.mm⁻¹ et 30 N.mm⁻¹, de préférence supérieure à 4 N.mm⁻¹, de préférence supérieure à 6 N.mm⁻¹, mesurée selon la méthode DIN EN ISO 13937-2.

La première couche de mousse 6 s'étend sur la surface interne 14 de la peau en matériau synthétique 4 et adhère à celle-ci. La première couche de mousse 6 présente une surface externe 16, s'étendant sur la surface interne 14 de la peau en matériau synthétique 4, et une surface interne 18, opposée à la surface externe 14. La première couche de mousse 6 forme une matelassure de l'élément de support 1 et présente ainsi une certaine souplesse.

A cet effet, la première couche de mousse 6 est réalisé en un matériau synthétique présentant une formulation contenant de l'eau. Plus particulièrement, la première couche de mousse 6 est une couche de mousse cellulaire, c'est-à-dire une couche de mousse contenant des bulles d'air. Ces cellules sont obtenues lors de la réaction chimique permettant d'obtenir la première couche de mousse 6 comme cela sera décrit ultérieurement.

La première couche de mousse 6 est par exemple réalisée en un matériau élastomérique, par exemple un matériau résultant d'une réaction polyol-isocyanate à l'aide d'un catalyseur de moussage. Selon un mode de réalisation, la première couche de mousse 6 est réalisée en une mousse de polyuréthane contenant de l'eau.

La première couche de mousse 6 présente une épaisseur comprise entre 1 mm et 15 mm, de préférence entre 4 mm et 9 mm. Il convient de noter que la première couche de mousse 6 peut présenter une épaisseur variable selon les caractéristiques souhaitées, notamment en terme de souplesse, pour la matelassure de l'élément de support. La première couche de mousse 6 présente une rigidité comprise entre 3N/30mm et 45N/30mm, de préférence entre 3N/30mm et 25N/30mm.

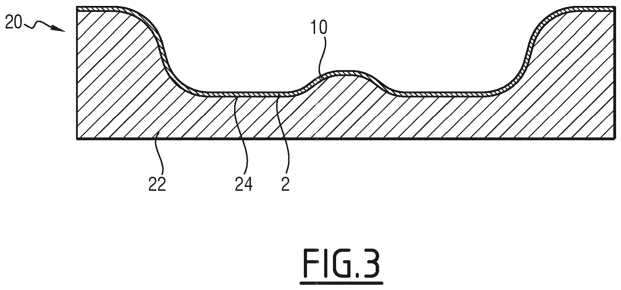

Un élément de support 1 tel que décrit ci-dessus présente un aspect satisfaisant du côté de sa surface extérieure et est apte à accueillir un passager du côté de la matelassure. Le procédé de réalisation d'un tel élément de support va à présent être décrit en référence aux Figs. 3 à 5.

L'élément de support 1 est réalisé dans un outil de réalisation 20 représenté sur les Figs. 3 à 8 permettant d'obtenir un élément de support fini en sortie de l'outil de réalisation 20.

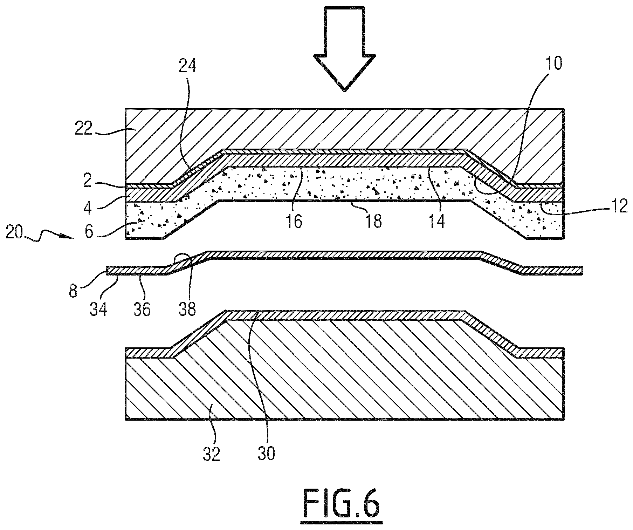

L'outil de réalisation 20 comprend au moins une première partie 22 définissant une première surface de formage 24 présentant la forme de la surface extérieure de l'élément de support 1 à réaliser. A ce titre, la forme de la première surface de formage 24 représentée sur les Figs. 3 à 5 n'est donnée qu'à titre d'exemple et d'autres formes peuvent être envisagées, comme représenté par exemple sur les Figs. 6 à 8. En outre, la première surface de formage 24 peut être agencée pour appliquer un aspect particulier sur la surface extérieure de l'élément de support 1, par exemple en présentant un grainage et/ou un motif localisé, tel qu'un logo ou autre, s'étendant en saillie ou en creux sur la première surface de formage 24.

Les différentes étapes du procédé décrit ci-dessous peuvent être réalisée alors que l'outil de réalisation 20 est chauffé, notamment la première surface de formage 24, par exemple à une température voisine de 70°C.

La couche externe 2 est réalisée par application d'au moins une couche de peinture sur la première surface de formage 24 de sorte que la couche externe 2 adopte la forme de la première surface de formage 24, comme représenté sur la Fig. 3. L'application de la couche de peinture se fait par exemple par pulvérisation. Lorsque la couche externe 2 comprend plusieurs couches de peinture et/ou de vernis, celles-ci sont appliquées successivement sur la première surface de formage 24 de l'extérieur vers l'intérieur, c'est-à-dire que la couche formant la surface extérieure, par exemple une couche de vernis, est appliquée d'abord sur la première surface de formage 24 puis que la couche s'étendant immédiatement contre cette première couche, par exemple une couche de peinture définissant la couleur de la surface extérieure, est appliquée contre la première couche tapissant la première surface de formage 24. Le chauffage de la première surface de formage 24 permet d'obtenir un séchage rapide de la couche externe 2.

Selon un mode de réalisation, un agent démoulant est d'abord appliqué sur la première surface de formage 24 avant la réalisation de la couche externe 2 et la ou les couches de peinture et/ou de vernis sont appliquées sur l'agent démoulant tapissant la première surface de formage 24. Un tel agent démoulant est par exemple appliqué par pulvérisation sur la première surface de formage 24 et permet de faciliter le retrait de l'élément de support 1 réalisé de l'outil de réalisation 20, comme cela sera décrit ultérieurement.

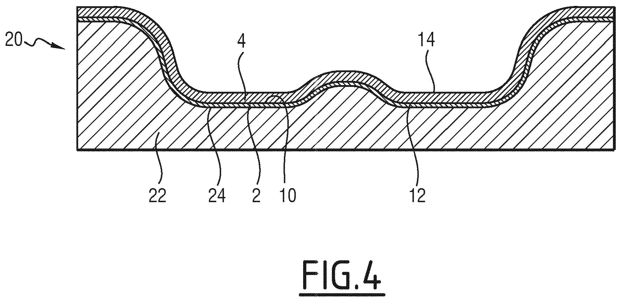

La peau en matériau synthétique 4 est ensuite appliquée contre la surface interne 10 de la couche externe 2, comme représenté sur la Fig. 4. La peau en matériau synthétique 4 est appliquée, par exemple par pulvérisation du matériau dépourvu d'eau formant la peau en matériau synthétique 4 contre la surface interne 10 de la couche externe 2, par exemple alors que celle-ci n'est pas encore sèche afin d'assurer l'adhésion entre la peau en matériau synthétique 4 et la couche externe 2. Le matériau de la peau en matériau synthétique 4 est maintenue à l'état visqueux après son application et avant l'application de la première couche de mousse 6, par exemple du fait du chauffage de la première partie 22 de l'outil de réalisation 20.

La première couche de mousse 6 est ensuite appliquée sur la surface interne 14 de la peau en matériau synthétique 4.

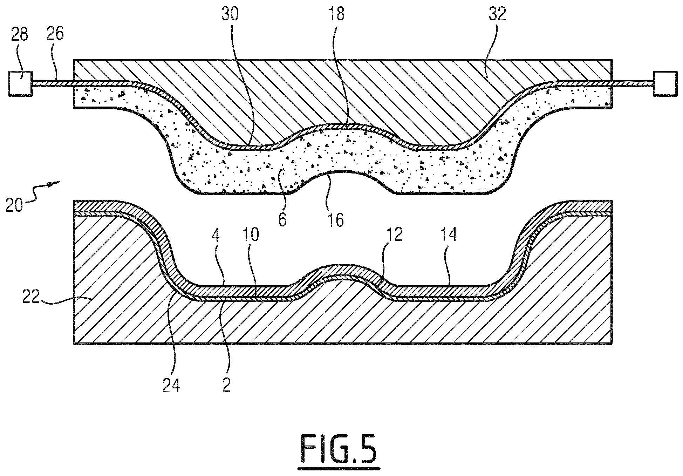

Selon le mode de réalisation représenté sur la Fig. 5, la première couche de mousse 6 est préalablement formée sur un film fonctionnel 26 avant d'être appliquée avec le film fonctionnel 26 sur la surface interne 14 de la peau en matériau synthétique 4. Le film fonctionnel 26 est par exemple un film de transfert, une nappe de renforcement mécanique, une nappe thermique ou autre. L'application de la couche de mousse 6 sur le film fonctionnel 26 se fait par exemple alors que le film fonctionnel 26 est tendu dans un cadre 28 en appliquant un matériau précurseur de mousse sur l'une des faces du film fonctionnel 26. Le matériau précurseur de mousse permet de former la première couche de mousse 6 par réaction chimique, notamment grâce à un catalyseur de moussage, comme décrit précédemment. Le catalyseur de moussage est différent de l'eau, la formulation du matériau précurseur de mousse contenant déjà de l'eau. La réaction chimique entre le matériau précurseur de mousse et le catalyseur crée une mousse cellulaire sur la face du film fonctionnel 26 puis l'ensemble formé par la première couche de mousse 6 et par le film fonctionnel 26 est appliqué sur la surface interne 14 de la peau en matériau synthétique 4 alors que la couche de mousse 6 est à l'état visqueux. Le matériau précurseur de mousse est par exemple appliqué par pulvérisation sur le film fonctionnel 26. Lorsque le film fonctionnel 26 est par exemple un film de transfert, destiné à être retiré après l'adhésion de la première couche de mousse 6 sur la peau en matériau synthétique 4, la surface interne 18 de la première couche de mousse 6 est appliquée sur le film fonctionnel 26, comme représenté sur la Fig. 5, et la surface externe 16 de la première couche de mousse 6 est appliquée sur la surface interne 14 de la peau en matériau synthétique 4. En variante, pour un film fonctionnel 26 autre qu'un film de transfert, le film fonctionnel 26 peut s'étendre sur la surface externe 16 de la première couche de mousse 6 et être appliqué sur la surface interne 14 de la peau en matériau synthétique 4 de sorte à être fixé à demeure dans l'élément de support 1. Dans tous les cas, l'application se faisant alors que la peau en matériau synthétique 4 est à l'état visqueux, on assure l'adhésion entre la première couche de mousse 6, également à l'état visqueux, ou avec le film fonctionnel 26.

Selon le mode de réalisation représenté sur la Fig. 5, l'ensemble formé par la première couche de mousse 6 et le film fonctionnel 26 est préformé avant l'application sur la surface interne 14 de la peau en matériau synthétique pour acquérir la forme de la surface intérieure de l'élément de support 1. Dans ce cas, cet ensemble est placé contre une deuxième surface de formage 30 d'une deuxième partie 32 de l'outil de réalisation 20, la deuxième surface de formage 30 présentant la forme de la surface intérieure de l'élément de support 1 à réaliser. Ainsi, au moins la surface interne 18 de la première couche de mousse 6 acquière la forme la surface intérieure de l'élément de support 1. Comme la première partie 22, la deuxième partie 32 peut être chauffée.

L'élément de support 1 est ensuite réalisé en approchant la deuxième partie 32 de l'outil de réalisation de la première partie 22 de sorte à faire adhérer l'ensemble formé par la première couche de mousse 6 et le film fonctionnel 26 sur la surface interne 14 de la peau en matériau synthétique 4. Après refroidissement et durcissement de la peau en matériau synthétique 4 et de la première couche de mousse 6, l'élément de support 1 forme un ensemble cohérent dans lequel la matelassure et la coque sont fixées l'une à l'autre, comme représenté sur les Figs. 1 et 2. La première et la deuxième parties 22, 32 de l'outil de réalisation 20 peuvent être séparées et l'élément de support 1 peut être retiré de l'outil de réalisation 20, cette opération étant facilitée lorsqu'un agent de démoulage a été appliqué sur la première surface de formage 24. Lorsque le film fonctionnel 26 est un film de transfert, celui-ci est retiré de la surface interne 18 de la première couche de mousse 6 après l'application de la surface externe 16 de la première couche de mousse 6 sur la surface interne 14 de la peau en matériau synthétique 4. L'élément de support 1 peut alors être utilisé dans un siège ou subir une opération supplémentaire de fixation d'un élément de couverture 8. Cette opération peut être réalisée en dehors de l'outil de réalisation 20, mais elle peut avantageusement être réalisée dans l'outil de réalisation 20, comme cela sera décrit ultérieurement.

En variante du mode de réalisation de la Fig. 5, l'ensemble formé de la première couche de mousse 6 et du film fonctionnel 26 est d'abord appliqué sur la surface interne 14 de la peau en matériau synthétique 4 puis la deuxième partie 32 est rapprochée de la première partie 22 de sorte à appliquer la deuxième surface de formage 30 sur la surface interne de l'ensemble afin de lui en conférer la forme et de sorte à solidariser cet ensemble à la peau en matériau synthétique 4.

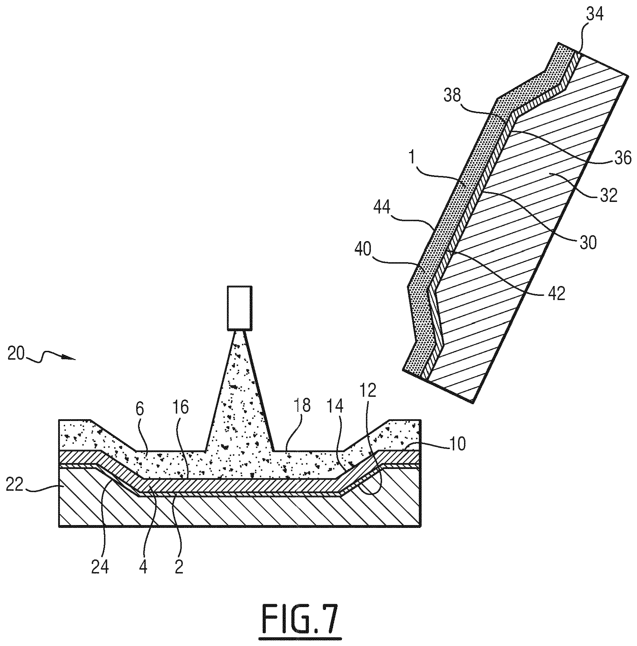

Selon encore une autre variante, par exemple lorsque l'utilisation d'un film fonctionnel 26 n'est pas prévue, la première couche de mousse 26 est appliquée directement sur la surface interne 14, par exemple par pulvérisation, comme représenté sur la Fig. 7. La deuxième surface de moulage 30 peut ensuite être appliquée sur la surface interne 18 de la première couche de mousse 6, soit directement soit avec un élément de couverture 8 interposé entre la deuxième surface formage 30 et la surface interne 18 de la première couche de mousse 6, comme cela va à présent être décrit en référence aux Figs. 6 à 8.

Selon le mode de réalisation représenté sur la Fig. 6, l'élément de couverture 8 est formé par une couche de revêtement 34 en matériau textile, en peau ou en matériau synthétique et comprenant une surface interne 36, formant la surface intérieure de l'élément de support 1, et une surface externe 38, opposée à la surface interne 36. Il est entendu que la couche de revêtement 34 peut être formée de plusieurs couches en matériau textile, en peau ou en matériau synthétique superposées.

Selon ce mode de réalisation, la couche de revêtement 34, plus particulièrement sa surface interne 36, est disposée contre la deuxième surface de formage 30 de la deuxième partie 32 de l'outil de réalisation 20 avant la fermeture de l'outil de réalisation de sorte à appliquer la surface externe 38 de la couche de revêtement 34 sur la surface interne 18 de la première couche de mousse 6 alors que celle-ci est à l'état visqueux lors de la fermeture de l'outil de réalisation 20, c'est-à-dire lors de l'application des première et deuxième parties 22, 32 de l'outil de réalisation l'une contre l'autre. Si la fermeture de l'outil de réalisation implique un retournement de la première partie 22 de l'outil de réalisation 20, comme représenté sur la Fig. 6, la couche externe 2, la peau en matériau synthétique 4 et la première couche de mousse 6 peuvent être maintenues contre la première surface de formage 24 par aspiration contre cette première surface de formage 24. De même, l'élément de couverture 8 peut être maintenu contre la deuxième surface de formage 30 par aspiration contre la deuxième surface de formage 30.

Selon le mode de réalisation de la Fig. 6, la couche de revêtement 34 est disposée à l'état souple dans l'outil de réalisation 20 et elle adopte la forme voulue grâce à son application contre la deuxième surface de formage 30 et contre la surface interne 18 de la première couche de mousse 6 et éventuellement grâce au chauffage puis au refroidissement de la couche de revêtement 34 dans l'outil de réalisation. En variante, la couche de revêtement 34 peut être préformée, par exemple dans un outil de réalisation intermédiaire, différent de l'outil de réalisation 20, de sorte à présenter la forme voulue lorsqu'elle est disposée contre la deuxième surface de formage 32.

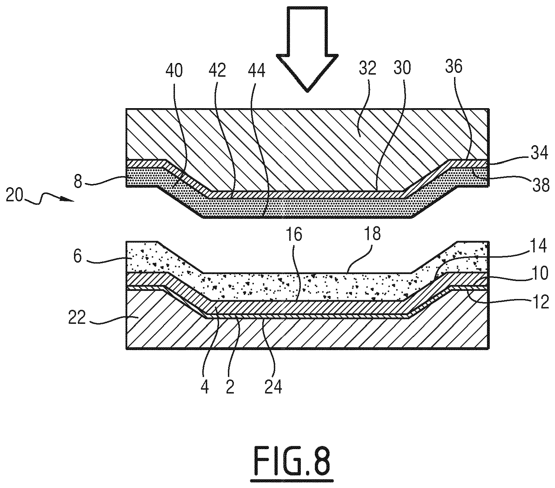

Selon le mode de réalisation des Figs. 7 et 8, l'élément de couverture 8 comprend en outre une deuxième couche de mousse 40 s'étendant sur la surface externe 38 de la couche de revêtement 34. Plus précisément, la deuxième couche de mousse 40 comprend une surface interne 42, appliquée sur la surface externe 38 de la couche de revêtement 34, et une surface externe 44, opposée à la surface interne 42, appliquée contre la surface interne 18 de la première couche de mousse 6 lorsque l'élément de couverture 8 est appliqué sur la première couche de mousse 6, ou contre le film fonctionnel 26 lorsque celui-ci reste présent. La deuxième couche de mousse 40. La deuxième couche de mousse 40 est par exemple réalisée en un matériau similaire à celui de la première couche de mousse 6. Ainsi, la deuxième couche de mousse 40 est par exemple réalisée en polyuréthane cellulaire. La deuxième couche de mousse 40 présente par exemple une épaisseur voisine de celle de la première couche de mousse 6. En d'autres termes, la deuxième couche de mousse 40 présente des caractéristiques similaires à celles de la première couche de mousse 6. La deuxième couche de mousse 40 forme ainsi une partie de la matelassure de l'élément de support 1 avec la première couche de mousse 6.

Selon l'invention illustrée par les Figs 7 et 8, l'élément de couverture 8 est par exemple réalisé et préformé avant d'être disposé contre la deuxième surface de formage 30 et appliqué sur la première couche de mousse 6. Plus particulièrement, dans ce cas, la deuxième couche de mousse 40 est par exemple appliquée sur un substrat (non représenté) puis est rapportée sur la surface externe 38 de la couche de revêtement 34, l'ensemble formé par le substrat, la deuxième couche de mousse 40 et la couche de revêtement 34 étant mis en forme pour présenter sensiblement la forme de la surface intérieure de l'élément de support 1 puis étant placé contre la deuxième surface de formage 30 de la deuxième partie 32 de l'outil de réalisation 20. Lors de la mise en forme de cet ensemble, la deuxième couche de mousse 40 est à l'état visqueux. Le substrat est ensuite retiré avant l'application de la deuxième couche de mousse 40 sur la première couche de mousse 6 alors que les première et deuxième couches de mousse 6 et 40 sont à l'état visqueux. Un tel procédé de réalisation de l'élément de couverture 8 est par exemple décrit dans le document FR-2 934 256 et l'homme du métier pourra s'y référer pour plus de détails quant à ces étapes de préformage de l'élément de couverture 8. L'élément de couverture 8 est par exemple réalisé dans un outil de réalisation auxiliaire différent de l'outil de réalisation 20 ou en utilisant la deuxième partie 32 de l'outil de réalisation 20.

Lorsque la première couche de mousse 6 est appliquée sur la peau en matériau synthétique 4 par l'intermédiaire de la deuxième partie 32 de l'outil de réalisation 20, comme décrit en référence à la Fig. 5, la première couche de mousse 6 est d'abord appliquée par la fermeture de l'outil de réalisation 20, puis la deuxième partie 32 est écartée de la première partie 22 pour pouvoir disposer l'élément de couverture 8 contre la deuxième surface de formage 30. En variante, l'outil de réalisation 20 comprend plusieurs deuxièmes parties 32, dont l'une est utilisée pour former la première couche de mousse 6 et l'autre est utilisée pour appliquer l'élément de couverture 8, les deuxièmes parties 32 étant successivement appliquées contre la première partie 22. Cela permet d'accélérer le cycle de production de l'élément de support 1 en réalisant certaines étapes en parallèle. Ainsi, la première couche de mousse 6 peut par exemple être appliquée contre la peau en matériau synthétique 4 pendant qu'une autre deuxième partie 32 est utilisée pour recevoir et/ou mettre en forme l'élément de couverture 8 avant de l'appliquer sur la première couche de mousse 6.

Le procédé de réalisation de l'élément de support 1 décrit ci-dessus permet d'obtenir un élément de support 1 fini présentant un aspect et un confort satisfaisants en un cycle de fonctionnement de l'outil de réalisation 20.

Selon des modes de réalisation particuliers, un ou plusieurs éléments fonctionnels peuvent être intégrés dans l'élément de support 1 lors de sa réalisation.

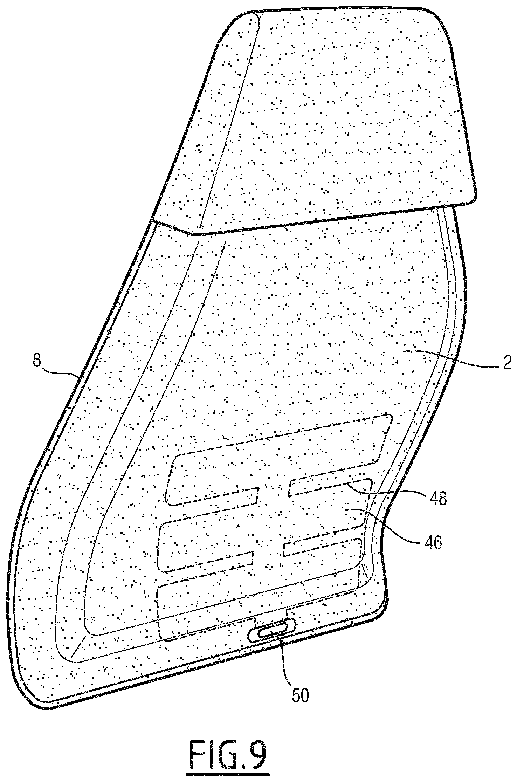

Ainsi, comme représenté sur la Fig. 9, l'élément fonctionnel est par exemple un film 46 formant au moins une poche 48 définissant un volume interne. Le film comprend une ouverture 50 débouchant à l'extérieur de l'élément de support 1 et étant en communication fluidique avec la poche 48. Ainsi, la poche 48 peut être gonflée en connectant son volume interne avec une source d'air, telle qu'une pompe, en passant par l'ouverture 50. Le film 46 forme ainsi un élément gonflable permettant de modifier le confort de l'élément de support 1 pour un passager appuyé contre la surface intérieure de l'élément de support. Le film 46 s'étend entre la première couche de mousse 6 et l'élément de couverture 8 et peut par exemple être intégré dans l'élément de support 1 à la façon du film fonctionnel 26, comme décrit précédemment. En variante, le film 46 est disposé entre la surface interne 18 de la première couche de mousse 6 et l'élément de couverture 8 avant la fermeture de l'outil de réalisation 20 alors que la première couche de mousse 6 est déjà formée. Le film 46 peut être agencé pour rester à demeure dans l'élément de support 1 ou pour se dégrader lors de la fermeture de l'outil de réalisation 20, par exemple en fondant, de sorte que la ou les poches sont formées directement dans la mousse de l'élément de support 1.

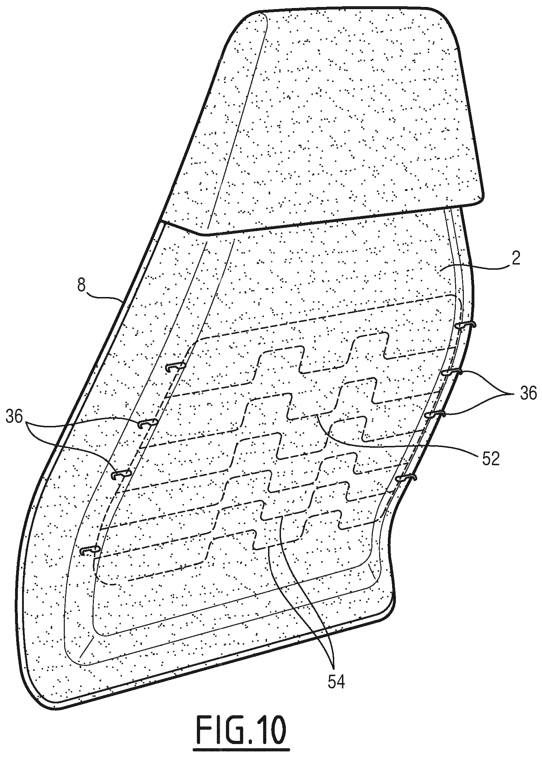

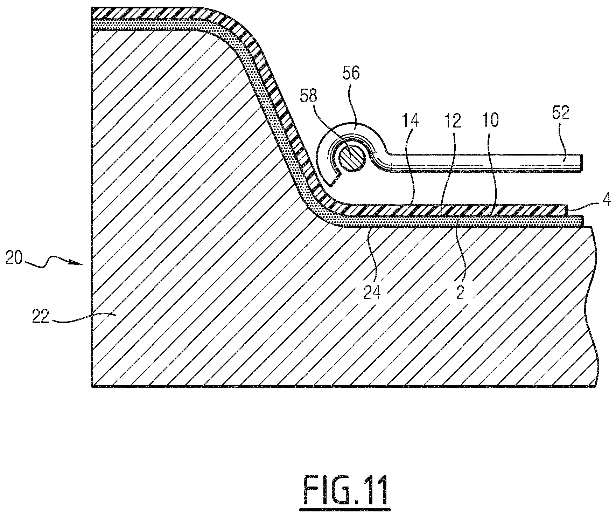

En variante ou en complément et comme représenté sur la Fig. 10, l'élément fonctionnel est une armature de suspension 52 s'étendant dans la première couche de mousse 6. Une telle armature 52 permet également d'améliorer le confort d'un passager appuyé contre la surface intérieure de l'élément de support 1. L'armature 52 comprend par exemple une pluralité de lattes métalliques 54 élastiques s'étendant en travers de l'élément de support 1. Les lattes métalliques 54 sont par exemple pourvues de crochets 56 à leurs extrémités permettant de fixer l'armature 52 sur la première partie 22 de l'outil de réalisation 20, comme représenté sur la Fig. 11. A cet effet, la première partie 22 comprend des moyens d'ancrage 58 des crochets 56 sur la première surface de formage 24 sur lesquels les crochets 56 sont fixés pour positionner l'armature 52 dans l'outil de réalisation 20. L'armature 52 est fixée sur la première surface de formage 24 après l'application de la couche externe 2 et de la peau en matériau synthétique 4 sur la première surface de formage 4. La première couche de mousse 6 est ensuite formée sur la peau en matériau synthétique 4 et sur l'armature 52 par exemple par pulvérisation, comme décrit précédemment. En d'autres termes, l'armature 52 est surmoulée par la première couche de mousse 6, ce qui permet de l'intégrer dans l'élément de support 1 au cours de la réalisation de celui-ci.

Le procédé de réalisation décrit ci-dessus permet ainsi d'obtenir un élément de support 1 fini et intégrant plusieurs fonctionnalités en un cycle de fonctionnement de l'outil de réalisation.

## Revendications

1. Procédé de réalisation d'un élément de support (1) de siège, comprenant au moins une couche externe (2), présentant une surface externe, formant une surface extérieure de l'élément de support, et une surface interne (10), opposée à la surface externe, une peau en matériau synthétique (4) s'étendant sur la surface interne (10) de la couche externe (2), et une première couche de mousse (6) s'étendant sur la peau en matériau synthétique (4), le procédé comprenant les étapes suivantes :
- former la couche externe (2) en appliquant au moins une couche de peinture contre une première surface de formage (24) d'un outil de réalisation (20), ladite première surface de formage (20) présentant la forme de la surface extérieure de l'élément de support (1) à réaliser,
- appliquer la peau en matériau synthétique (4) contre la surface interne (10) de la couche externe (2), la peau en matériau synthétique (4) étant réalisée en un matériau synthétique dépourvu d'eau, et
- appliquer la première couche de mousse (6) contre une surface interne (14) de la peau en matériau synthétique (4), la première couche de mousse (6) présentant une formulation contenant de l'eau et un catalyseur de moussage au moment de son application sur la peau en matériau synthétique (4),
l'élément de support (1) comprenant en outre un élément de couverture (8) s'étendant sur la surface interne (18) de la première couche de mousse (6) et formant la surface intérieure de l'élément de support (1), l'élément de couverture (8) comprenant au moins une couche de revêtement (34) en matériau textile, en peau ou en matériau synthétique, ladite couche de revêtement (34) formant la surface intérieure de l'élément de support (1) le procédé comprenant les étapes suivantes :
- appliquer l'élément de couverture (8) contre la deuxième surface de formage (30) de l'outil de réalisation (20) avant la fermeture de l'outil de réalisation (20),
- fermer l'outil de réalisation (20) de sorte à appliquer l'élément de couverture (8) contre la première couche de mousse (6) à l'état visqueux de sorte à solidariser l'élément de couverture (8) et la première couche de mousse (6) dans l'outil de réalisation (20)
le procédé étant **caractérisé en ce qu'**il comprend une étape de formage de l'élément de couverture (8) avant son application sur la deuxième surface de formage (30) de l'outil de réalisation (20), dans laquelle une deuxième couche de mousse (40) est appliquée sur un substrat puis est rapportée sur une surface externe (38) de la couche de revêtement (34), l'ensemble formé par le substrat, la deuxième couche de mousse (40) et la couche de revêtement (34) étant mis en forme pour présenter sensiblement la forme de la surface intérieure de l'élément de support (1) puis étant placé contre la deuxième surface de formage (30) de l'outil de réalisation (20), le substrat étant retiré avant l'application de la deuxième couche de mousse (40) sur la première couche de mousse (6).

2. Procédé de réalisation selon la revendication 1, dans lequel le matériau de la peau en matériau synthétique (4) est du polyuréthane sensiblement non cellulaire et la première couche de mousse (6) est une mousse de polyuréthane cellulaire.

3. Procédé de réalisation selon la revendication 1 ou 2, dans lequel la première couche (6) est formée sur un film fonctionnel (26) avant l'application de la première couche de mousse (6) sur la peau en matériau synthétique (4), l'ensemble formé par ladite première couche de mousse (6) et par ledit film fonctionnel (26) étant appliqué contre la surface interne (14) de la peau en matériau synthétique (4).

4. Procédé de réalisation selon la revendication 3, dans lequel le film fonctionnel (26) est un film de transfert, la première couche de mousse (6) étant pulvérisée sur ledit film de transfert de sorte qu'une surface interne (18) de ladite première couche de mousse (6) s'étende sur le film de transfert, l'ensemble formé par la première couche de mousse (6) et le film de transfert étant appliqué contre la peau en matériau synthétique (4) de sorte qu'une surface externe (16) de la première couche de mousse (6) s'étende sur la surface interne (14) de la peau en matériau synthétique (4), le film de transfert étant retiré après l'application de la surface externe (16) de la première couche de mousse (6) sur la surface interne (14) de la peau en matériau synthétique (4).

5. Procédé de réalisation selon l'une quelconque des revendications 1 à 4, dans lequel une couche d'un agent démoulant est appliquée contre la première surface de formage (24) avant l'application de la couche de peinture sur ladite première surface de formage (24).

6. Procédé de réalisation selon l'une quelconque des revendications 1 à 5, dans lequel la couche de peinture, la peau en matériau synthétique (4) et/ou la première couche de mousse (6) sont appliquées par pulvérisation.

7. Procédé de réalisation selon la revendication 6, dans laquelle la couche de peinture est appliquée par pulvérisation sur la première surface de formage (24), puis le matériau de la peau en matériau synthétique est appliqué par pulvérisation sur la couche de peinture, la première couche de mousse (6) étant appliquée par pulvérisation sur la peau en matériau synthétique (4) ou sur un film fonctionnel (26).

8. Procédé de réalisation selon l'une quelconque des revendications 1 à 7, dans lequel la première couche de mousse (6) est appliquée contre la surface interne (14) de la peau en matériau synthétique (4) alors que ladite peau en matériau synthétique (4) et/ou ladite première couche de mousse (6) sont à l'état visqueux.

9. Procédé de réalisation selon l'une quelconque des revendications 1 à 8, comprenant en outre l'application d'une deuxième surface de formage (30) de l'outil de réalisation (20) du côté d'une surface interne (18) de la première couche de mousse (6), ladite deuxième surface de formage (30) présentant la forme d'une surface intérieure de l'élément de support (1) à réaliser, ledit élément de support (1) étant formé entre la première surface de formage (14) et la deuxième surface de formage (30) dans une position fermée de l'outil de réalisation (20).

10. Procédé de réalisation selon l'une quelconque des revendications 1 à 9, dans lequel la deuxième couche de mousse (40) est à l'état visqueux lors de la mise en forme de l'ensemble formé par le substrat, la deuxième couche de mousse (40) et la couche de revêtement (34) et lors de l'application de la deuxième couche de mousse (40) sur la première couche de mousse (6).

11. Procédé de réalisation selon l'une quelconque des revendications 1 à 10, dans lequel l'élément de couverture (8) est maintenu contre la deuxième surface de formage (30) de l'outil de réalisation (20) par aspiration contre la deuxième surface de formage (30) et/ou dans lequel la couche externe (2) est maintenue contre la première surface de formage (24) par aspiration contre la première surface de formage (14).

12. Procédé de réalisation selon l'une quelconque des revendications 1 à 11, dans lequel un élément fonctionnel est placé dans l'outil de réalisation (20) de sorte à s'étendre dans la première couche de mousse (6) et/ou entre la première couche de mousse (6) et l'élément de couverture (8) lorsque l'outil de réalisation (20) est fermé.

13. Procédé de réalisation selon la revendication 12, dans lequel l'élément fonctionnel est une armature de suspension (52) s'étendant dans la première couche de mousse (6), ladite armature de suspension (52) étant fixée à la première surface de formage (14) avant l'application de la première couche de mousse (6) sur la surface interne (14) de la peau en matériau synthétique (4).

14. Procédé de réalisation selon la revendication 12, dans lequel l'élément fonctionnel est un film (46) formant au moins une poche (48) définissant un volume interne, ledit film (46) s'étendant entre la première couche de mousse (6) et l'élément de couverture (8), ledit film (46) comprenant une ouverture (50) débouchant à l'extérieur de l'élément de support (1) de siège et étant en communication fluidique avec la poche (48) de sorte que la poche (48) peut être gonflée par introduction d'air dans le volume interne en passant par l'ouverture (50).

## Patentansprüche

1. Verfahren zum Herstellen eines Sitzträgerelements (1), umfassend mindestens eine Außenschicht (2), die eine Außenoberfläche, die eine äußere Oberfläche des Trägerelements formt, und eine Innenoberfläche (10), die der Außenoberfläche gegenüberliegt, aufweist, eine Haut (4) aus synthetischem Material, die sich über die Innenoberfläche (10) der Außenschicht (2) erstreckt, und eine erste Schaumschicht (6), die sich über die Haut (4) aus synthetischem Material erstreckt, das Verfahren umfassend die folgenden Schritte:
- Formen der Außenschicht (2) durch Aufbringen mindestens einer Farbschicht auf eine erste Formoberfläche (24) eines Formwerkzeugs (20), wobei die erste Formoberfläche (20) die Gestalt der äußeren Oberfläche des zu erzeugenden Trägerelements (1) aufweist,
- Aufbringen der Haut (4) aus synthetischem Material auf die Innenoberfläche (10) der Außenschicht (2), wobei die Haut (4) aus synthetischem Material aus einem wasserfreien synthetischen Material hergestellt ist, und
- Aufbringen der ersten Schaumschicht (6) auf eine Innenoberfläche (14) der Haut (4) aus synthetischem Material, wobei die erste Schaumschicht (6) zu der Zeit ihrer Aufbringung auf die Haut (4) aus synthetischem Material eine Formulierung, die Wasser und einen schäumenden Katalysator enthält, aufweist,
das Trägerelement (1) ferner umfassend ein Abdeckelement (8), das sich über die Innenoberfläche (18) der ersten Schaumschicht (6) erstreckt und die innere Oberfläche des Trägerelements (1) formt, das Abdeckelement (8) umfassend mindestens eine Überzugsschicht (34) aus Textilmaterial, Haut oder synthetischem Material, wobei die Überzugsschicht (34) die innere Oberfläche des Trägerelements (1) formt, das Verfahren umfassend die folgenden Schritte:
- Aufbringen des Abdeckelements (8) auf die zweite Formoberfläche (30) des Formwerkzeugs (20), bevor das Formwerkzeug (20) geschlossen wird,
- Schließen des Formwerkzeugs (20), um das Abdeckelement (8) auf die erste Schaumschicht (6) in einem viskosen Zustand aufzubringen, um das Abdeckelement (8) und die erste Schaumschicht (6) in dem Formwerkzeug (20) zu verbinden,
wobei das Verfahren **dadurch gekennzeichnet ist, dass** es einen Schritt des Formens des Abdeckelements (8) umfasst, bevor es auf die zweite Formoberfläche (30) des Formwerkzeugs (20) aufgebracht wird, wobei eine zweite Schaumschicht (40) auf ein Substrat aufgebracht und dann zu einer Außenoberfläche (38) der Überzugsschicht (34) hinzugefügt wird, wobei die Anordnung, die durch das Substrat, die zweite Schaumschicht (40) und die Überzugsschicht (34) geformt wird, gestaltet ist, um der Gestalt der inneren Oberfläche des Trägerelements (1) im Wesentlichen zu entsprechen, und dann gegen die zweite Formoberfläche (30) des Formwerkzeugs (20) platziert wird, wobei das Substrat entfernt wird, bevor die zweite Schaumschicht (40) auf die erste Schaumschicht (6) aufgebracht wird.

2. Herstellungsverfahren nach Anspruch 1, wobei das Material der Haut (4) aus synthetischem Material im Wesentlichen nichtzelliges Polyurethan ist und die erste Schaumschicht (6) ein zelliger Polyurethanschaum ist.

3. Herstellungsverfahren nach Anspruch 1 oder 2, wobei die erste Schicht (6) auf einer Funktionsfolie (26) geformt wird, bevor die erste Schaumschicht (6) auf die Haut (4) aus synthetischem Material aufgebracht wird, wobei die Anordnung, die durch die erste Schaumschicht (6) und durch die Funktionsfolie (26) geformt wird, auf die Innenoberfläche (14) der Haut (4) aus synthetischem Material aufgebracht wird.

4. Herstellungsverfahren nach Anspruch 3, wobei die Funktionsfolie (26) eine Transferfolie ist, wobei die erste Schaumschicht (6) auf die Transferfolie gesprüht wird, sodass sich eine Innenoberfläche (18) der ersten Schaumschicht (6) über die Transferfolie erstreckt, wobei die Anordnung, die durch die erste Schaumschicht (6) und die Transferfolie geformt wird, auf die Haut (4) aus synthetischem Material aufgebracht wird, sodass sich eine Außenoberfläche (16) der ersten Schaumschicht (6) über die Innenoberfläche (14) der Haut (4) aus synthetischem Material erstreckt, wobei die Transferfolie entfernt wird, nachdem die Außenoberfläche (16) der ersten Schaumschicht (6) auf die Innenoberfläche (14) der Haut (4) aus synthetischem Material aufgebracht worden ist.

5. Herstellungsverfahren nach einem der Ansprüche 1 bis 4, wobei eine Schicht eines Trennmittels auf die erste Formoberfläche (24) aufgebracht wird, bevor die Farbschicht auf die erste Formoberfläche (24) aufgebracht wird.

6. Herstellungsverfahren nach einem der Ansprüche 1 bis 5, wobei die Farbschicht, die Haut (4) aus synthetischem Material und/oder die erste Schaumschicht (6) durch Sprühen aufgebracht werden.

7. Herstellungsverfahren nach Anspruch 6, wobei die Farbschicht auf die erste Formoberfläche (24) gesprüht wird und dann das Material der Haut aus synthetischem Material auf die Farbschicht gesprüht wird, wobei die erste Schaumschicht (6) auf die Haut (4) aus synthetischem Material oder auf eine Funktionsfolie (26) gesprüht wird.

8. Herstellungsverfahren nach einem der Ansprüche 1 bis 7, wobei die erste Schaumschicht (6) auf die Innenoberfläche (14) der Haut (4) aus synthetischem Material aufgebracht wird, während sich die Haut (4) aus synthetischem Material und/oder die erste Schaumschicht (6) in einem viskosen Zustand befinden.

9. Herstellungsverfahren nach einem der Ansprüche 1 bis 8, ferner umfassend das Aufbringen einer zweiten Formoberfläche (30) des Formwerkzeugs (20) auf eine Innenoberfläche (18) der ersten Schaumschicht (6), wobei die zweite Formoberfläche (30) die Gestalt einer inneren Oberfläche des herzustellenden Trägerelements (1) aufweist, wobei das Trägerelement (1) zwischen der ersten Formoberfläche (14) und der zweiten Formoberfläche (30) in einer geschlossenen Position des Formwerkzeugs (20) geformt wird.

10. Herstellungsverfahren nach einem der Ansprüche 1 bis 9, wobei sich die zweite Schaumschicht (40) während der Gestaltung der Anordnung, die durch das Substrat, die zweite Schaumschicht (40) und die Überzugsschicht (34) geformt wird, und während der Aufbringung der zweiten Schaumschicht (40) auf die erste Schaumschicht (6) in einem viskosen Zustand befindet.

11. Herstellungsverfahren nach einem der Ansprüche 1 bis 10, wobei das Abdeckelement (8) durch Ansaugen der zweiten Formoberfläche (30) gegen die zweite Formoberfläche (30) des Formwerkzeugs (20) gehalten wird und/oder wobei die Außenschicht (2) durch Ansaugen der ersten Formoberfläche (24) gegen die erste Formoberfläche (14) gehalten wird.

12. Herstellungsverfahren nach einem der Ansprüche 1 bis 11, wobei ein Funktionselement in dem Formwerkzeug (20) platziert ist, um sich in die erste Schaumschicht (6) und/oder zwischen die erste Schaumschicht (6) und das Abdeckelement (8) zu erstrecken, wenn das Formwerkzeug (20) geschlossen ist.

13. Herstellungsverfahren nach Anspruch 12, wobei das Funktionselement ein Aufhängerahmen (52) ist, der sich in die erste Schaumschicht (6) erstreckt, wobei der Aufhängerahmen (52) an der ersten Formoberfläche (14) befestigt wird, bevor die erste Schaumschicht (6) auf die Innenoberfläche (14) der Haut (4) aus synthetischem Material aufgebracht wird.

14. Herstellungsverfahren nach Anspruch 12, wobei das Funktionselement eine Folie (46) ist, die mindestens eine Tasche (48) formt, die ein inneres Volumen definiert, wobei sich die Folie (46) zwischen der ersten Schaumschicht (6) und dem Abdeckelement (8) erstreckt, die Folie (46) umfassend eine Öffnung (50), die zu dem Äußeren des Sitzträgerelements (1) führt und in Fluidverbindung mit der Tasche (48) steht, sodass die Tasche (48) durch Luft, die durch die Öffnung (50) hindurch in das innere Volumen eingeführt wird, aufgeblasen werden kann.

## Claims

1. A method for producing a seat support element (1), comprising at least one outer layer (2), having an outer surface, forming an exterior surface of the support element, and an inner surface (10), opposite the outer surface, a synthetic material skin (4) extending over the inner surface (10) of the outer layer (2), and a first foam layer (6) extending over the synthetic material skin (4), the method comprising the following steps:
- forming the outer layer (2) by applying at least one layer of paint to a first forming surface (24) of a forming tool (20), said first forming surface (20) having the shape of the exterior surface of the support element (1) to be produced,
- applying the synthetic material skin (4) to the inner surface (10) of the outer layer (2), the synthetic material skin (4) being made of a water-free synthetic material, and
- applying the first foam layer (6) to an inner surface (14) of the synthetic material skin (4), the first foam layer (6) having a formulation containing water and a foaming catalyst at the time of its application to the synthetic material skin (4),
the support element (1) further comprising a covering element (8) extending over the inner surface (18) of the first foam layer (6) and forming the interior surface of the support element (1), the covering element (8) comprising at least one coating layer (34) of textile material, skin or synthetic material, said coating layer (34) forming the interior surface of the support element (1) the method comprising the following steps:
- applying the covering element (8) to the second forming surface (30) of the forming tool (20) before the forming tool (20) is closed,
- closing the forming tool (20) so as to apply the covering element (8) to the first layer of foam (6) in a viscous state so as to bond the covering element (8) and the first layer of foam (6) in the forming tool (20)
the method being **characterized in that** it comprises a step of forming the covering element (8) before it is applied to the second forming surface (30) of the forming tool (20), a second layer of foam (40) being applied to a substrate and then added to an outer surface (38) of the coating layer (34), the assembly formed by the substrate, the second layer of foam (40) and the coating layer (34) being shaped to substantially match the shape of the interior surface of the support element (1) and then being placed against the second forming surface (30) of the forming tool (20), the substrate being removed before the second foam layer (40) is applied to the first foam layer (6).

2. The production method according to claim 1, wherein the material of the synthetic material skin (4) is substantially non-cellular polyurethane and the first foam layer (6) is a cellular polyurethane foam.

3. The production method according to claim 1 or 2, wherein the first layer (6) is formed on a functional film (26) before the first foam layer (6) is applied to the synthetic material skin (4), the assembly formed by said first foam layer (6) and by said functional film (26) being applied to the inner surface (14) of the synthetic material skin (4).

4. The production method according to claim 3, wherein the functional film (26) is a transfer film, the first foam layer (6) being sprayed onto said transfer film so that an inner surface (18) of said first foam layer (6) extends over the transfer film, the assembly formed by the first foam layer (6) and the transfer film being applied to the synthetic material skin (4) so that an outer surface (16) of the first foam layer (6) extends over the inner surface (14) of the synthetic material skin (4), the transfer film being removed after the outer surface (16) of the first foam layer (6) has been applied to the inner surface (14) of the synthetic material skin (4).

5. The production method according to any of claims 1 to 4, wherein a layer of a release agent is applied to the first forming surface (24) before the paint layer is applied to said first forming surface (24).

6. The production method according to any of claims 1 to 5, wherein the paint layer, the synthetic material skin (4) and/or the first foam layer (6) are applied by spraying.

7. The production method according to claim 6, wherein the paint layer is sprayed onto the first forming surface (24) and then the material of the synthetic material skin is sprayed onto the paint layer, the first foam layer (6) being sprayed onto the synthetic material skin (4) or onto a functional film (26).

8. The production method according to any of claims 1 to 7, wherein the first foam layer (6) is applied to the inner surface (14) of the synthetic material skin (4) while said synthetic material skin (4) and/or said first foam layer (6) are in a viscous state.

9. The production method according to any of claims 1 to 8, further comprising the application of a second forming surface (30) of the forming tool (20) to an inner surface (18) of the first foam layer (6), said second forming surface (30) having the shape of an interior surface of the support element (1) to be produced, said support element (1) being formed between the first forming surface (14) and the second forming surface (30) in a closed position of the forming tool (20).

10. The production method according to any of claims 1 to 9, wherein the second foam layer (40) is in a viscous state during the shaping of the assembly formed by the substrate, the second foam layer (40) and the coating layer (34) and during the application of the second foam layer (40) to the first foam layer (6).

11. The production method according to any of claims 1 to 10, wherein the covering element (8) is held against the second forming surface (30) of the forming tool (20) by suction against the second forming surface (30) and/or wherein the outer layer (2) is held against the first forming surface (24) by suction against the first forming surface (14).

12. The production method according to any of claims 1 to 11, wherein a functional element is placed in the forming tool (20) so as to extend into the first foam layer (6) and/or between the first foam layer (6) and the covering element (8) when the forming tool (20) is closed.

13. The production method according to claim 12, wherein the functional element is a suspension frame (52) extending into the first foam layer (6), said suspension frame (52) being attached to the first forming surface (14) before the first foam layer (6) is applied to the inner surface (14) of the synthetic material skin (4).

14. The production method according to claim 12, wherein the functional element is a film (46) forming at least one pocket (48) defining an internal volume, said film (46) extending between the first foam layer (6) and the covering element (8), said film (46) comprising an opening (50) leading to the exterior of the seat support element (1) and being in fluid communication with the pocket (48) so that the pocket (48) can be inflated by air being introduced into the internal volume through the opening (50).
